# EUROPEAN PATENT SPECIFICATION

(11) **EP 0 705 223 B1**
(45) Date of publication and mention of the grant of the patent: **20.10.1999**
(21) Application number: 93908211.1
(22) Date of filing: 11.03.1993
(51) Int. Cl.: C03B 37/05

(54) **METHOD AND APPARATUS FOR INFLUENCING A STREAM OF MOLTEN MINERAL IN THE MANUFACTURE OF MINERAL WOOL**
VERFAHREN UND VORRICHTUNG ZUM BEEINFLUSSEN EINES STROMS GESCHMOLZENEN MINERALS BEIM HERSTELLEN VON MINERALWOLLE
PROCEDE ET APPAREIL CONCU POUR INFLUENCER LE FLUX D'UN MATERIAU MINERAL FONDU DANS LA FABRICATION DE LA LAINE MINERALE

(30) Priority: 27.03.1992 SE 9200957
(43) Date of publication of application: 10.04.1996
(73) Proprietor: ROCKWOOL AKTIEBOLAGET, S-541 86 Skövde (SE)
(72) Inventor: HARTUNG, Gunnar, S-541 40 Skövde (SE)
(74) Representative: Avellan-Hultman, Olle
(86) International application number: SE9300217
(87) International publication number: WO9320016

(56) References cited:
- EP-A- 0 187 439
- AU-B- 135 499
- US-A- 2 577 431

## Description

The present invention relates to a method and an apparatus for supplying a stream of molten mineralic material to a cascade spinning machine comprising several mainly cylindrical spinner wheels in the manufacture of mineral wool. The molten mineralic material is thereby supplied to the spinner wheels, and from said spinner wheels particles of molten mineral are being thrown out by the action of the centrifugal force thereby forming mineral fibres.

When manufacturing rockwool and other types of mineral wool there is often used a so called cascade spinning machine. Such a machine generally comprises 2-4 spinner wheels in the form of cylindrical steel cylinders having substantially horizontal and parallel shafts. The cylinders are cooled and they are brought to rotate rapidly. The cylinders are arranged to receive and fibrate a stream of molten mineral in that one of the spinner wheels receives a free falling stream of molten mineral. The molten mineral sticks to said spinner wheel and forms a so called ring of molten mineral. A substantial portion of the molten mineral, however, is thrown onto the succeeding spinner wheel on which a corresponding ring of molten mineral is formed. The excess of molten mineral is thrown onto a third spinner wheel, or back to the first spinner wheel in case the spinning machine is formed with only two spinner wheels.

Each such spinning machine has a limited capacity. By "capacity" is thereby meant the amount of mineral wool having an acceptable quality which can be manufactured per time unit with an acceptable exploiting of the molten mineralic material. It always is an aim to provide as high yield as possible and it is therefore important that as high amount as possible of the molten material sticks to the spinner wheel, and that as little amount as possible of the molten material, preferably no molten material at all, is thrown off in advance. This always has been a problem and has caused lots of work, and several solutions of said problem has been suggested. The suggested solutions have been based on one out of two main ideas, namely either to give the supplied stream of molten mineral a high impact energy and/or to spread the stream of molten mineral over a larger part of the spinner wheel length (width).

In the Swedish patent 443.133 there is suggested a way of providing the desired widening of the stream of molten mineral. This is possible by applying, in a suitable way, a force against the stream of molten mineral, for instance a force from a gas flow. Said force alternatively can be provided in that a stationary or a rotatating deflector is introduced in the stream of molten mineral.

The present invention relates to a method and an apparatus by means of which it is possible to substantially more simply and more safely than heretofore provide the desired widening of the stream of molten mineral.

Thus, the invention relates to a method of supplying molten mineral to a cascade spinning machine having several, mainly cylindrical spinner wheels for the manufacture of mineral wool, as specified in claim 1.

For providing a widening of the stream of molten mineral a free falling stream of molten mineral is fed to a splitting device which splits the stream of molten mineral into two part streams by which one or two spinner wheels are hit.

Said part streams also can be further split by two additional splitting devices so that four part streams are being formed before said streams hit the spinner wheel or wheels.

According to one embodiment of the invention all part streams hit one and the same spinner wheel, and according to another embodiment of the invention each one of two part streams hits one of two like large spinner wheels mounted on about the same height and close to each other.

The invention also relates to an apparatus according to claim 5. This apparatus comprises a splitting device which may basically comprise a tube, preferably a metal tube having a good thermal conductivity, for instance a copper tube.The tube is mounted substantially horizontally. A cooling medium, for instance water, flows through the tube. The tube can be U-shaped, for instance so that the branches of the tube are placed close to each other and above each other, or so that there is a horizontal tube piece between the branches which piece is the actual splitting part thereof.

The branches of the tube may be flattened from the sides at some place thereof. Also, at least the upper branch of the U-shaped tube may be bent down in a V-formation at a longitudinal place thereof. In case the splitting device basically comprises a horizontal splitting piece this can be flattened from the sides or bent down in a V-shape at a place thereof.

The invention now is to be described with reference to the accompanying drawings.

In the drawings figure 1 shows a first embodiment of an apparatus for perfoming the method according the invention. Figures 2a and 2b show, diagrammatically and in cross sections, two alternative ways of splitting a stream of molten mineral i accordance with the invention. Figures 3a and 3b correspondingly show how the stream of molten mineral is spread over three successive spinner wheels. Figure 3c is a side view of the three spinner wheels illustrated in figures 3a and 3b. Figure 4 diagrammatically illustrates how the stream of molten mineral is widened on two parallel spinner wheels. Figures 5a and 5b show a specially formed splitting device, and figure 6 shows an alternatively shaped splitting device. Figure 7 likewise shows an alternatively formed splitting device.

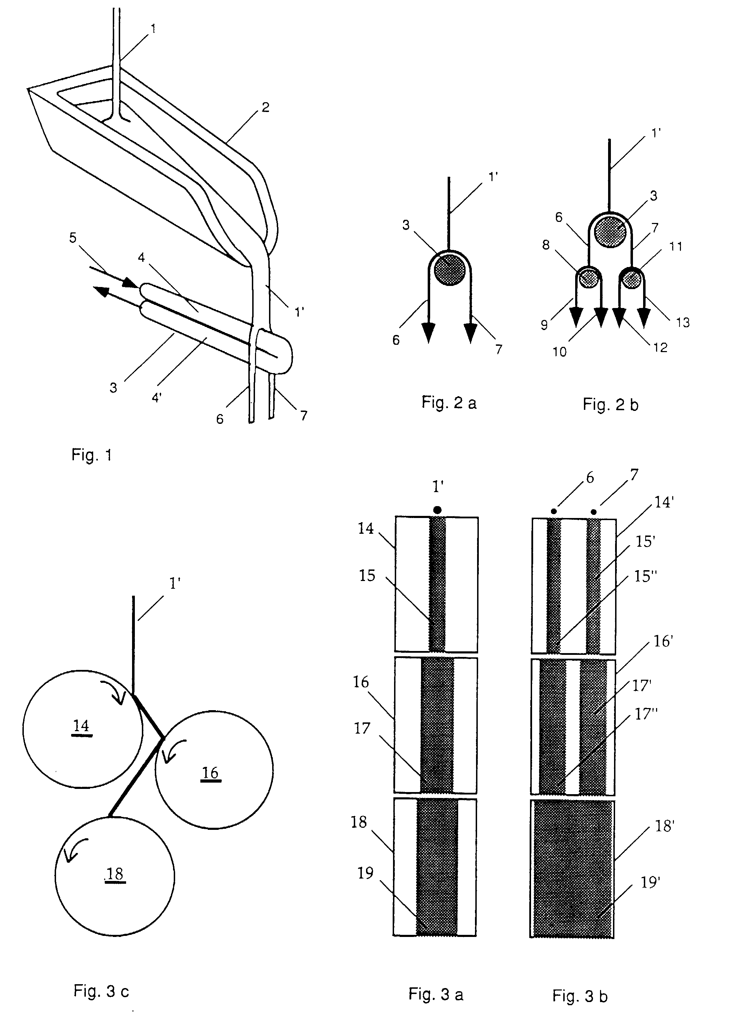

Figure 1 shows a stream 1 of molten mineral coming from a not illustrated melting furnace and flowing down along a melt flute 2 and therefrom, as a free falling stream 1' of molten mineral down towards a not illustrated cascade spinning machine. A splitting device 3 (genereally referred to as a splitter) is mounted between the melt flute 2 and the spinning machine.The splitting device or splitter 3 is formed as a U-shaped tube having two branches 4 and 4', which are substantially horizontal and located above each other. Further there is a not illustrated means for supplying and discharging a cooling medium 5 arranged so that the cooling medium 5 can flow through the tube. The freely falling stream 1' of molten mineral will, after leaving the melt flute 2, hit the splitter 3, whereby the stream of molten mineral becomes split into two part streams 6 and 7. Each of said part streams 6 and 7, separately of each other, hits a spinner wheel. By splitting the stream 1' of molten mineral into two part streams 6 and 7 a wider stream of molten mineral is obtained already when it hits the first spinner wheel, and an enlarged portion of the molten mineral thereby sticks to the spinner wheel. Thereby the so called spinning yield becomes increased. The splitter can be formed in various ways. The splitter should be made of a material having a good thermal conductivity, preferably of a copper tube or a similar material.

I figure 2a there is diagrammatically shown how the stream of molten mineral 1' hits the splitter 3 and is thereby split into two part streams 6 and 7. For further widening the stream of molten mineral 1' several additional splitting devices can be mounted under the first splitter 3 so that also each of the part streams 6 and 7 is split into two additional part streams. This is illustrated in figure 2b. In this case the stream 1' of molten mineral hits the splitter 3, whereby the part streams 6 and 7 are formed. Thereafter the part stream 6 hits a further splitting device or splitter 8 which splits the part stream 6 into additional part streams 9 and 10. Likewise the part stream 7 hits the splitting device 11 which forms additional part streams 12 and 13.

Figures 3a and 3b shows the principle for the widening of the stream of molten mineral as compared with the known art. For the sake of clearness three spinner wheels are illustrated on a line. In fact the spinner wheels, however, are arranged as shown in figure 3c.

In figure 3a the stream 1' of molten mineral directly hits the first spinner wheel 14 of a cascade spinning machine. Thereby a melt ring 15 is formed on the spinner wheel 14. When the stream 1' of molten mineral hits the hext spinner wheel 16 it has become slightly widened, and the melt ring 17 is additionally widened on the spinner wheel 16. From there the stream of molten mineral is moved on and hits a still further spinner wheel 18, on which the melt ring 19 is still more widened.

In figure 3b is shown what happens when the stream 1' of molten mineral is split into two part streams 6 and 7 which both hit the first spinner wheel 14'. Thereby two melt rings 15' and 15" are formed on said first spinner wheel 14', the total width of which is greater than the width of the melt ring 15 of figure 3a. When the molten mineral is thrown over to the second spinner wheel 16' and sticks thereto there are formed two melt rings 17' and 17" also on this spinner wheel 16' each of which is wider than the melt rings 15' and 15" on the first spinner wheel 14', and which have a total width which is greater than the that of the melt ring 17 of figure 3a. When thereafter the molten mineral, which is moved on to a further spinner wheel 18', sticks to said spinner wheel a still greater amount of the molten mineral sticks thereto so that one single melt ring 19' is formed the width of which is greater that the width of the melt ring 19 of figure 3a.

Figure 3c shows how the spinner wheels 14, 16 and 18 are arranged in a three wheel spinner machine. The arrows in the figure show the direction of rotation of the spinner wheels. It is also evident from the figure that the stream of molten mineral 1' first hits the spinner wheel 14 and is thereafter thrown on to the spinner wheel 16 and then to the spinner wheel 18.

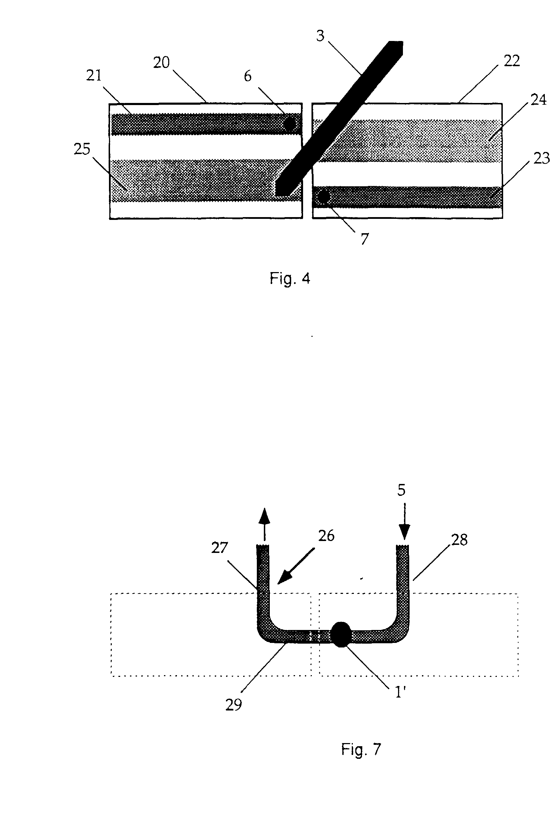

In a spinning machine having only two spinner wheels of about the same size and having parallel shafts and arranged on the same vertical level it may be advantageous that each of the the two part strems hits one of the spinner wheels on opposite sides of the central line of the spinner wheel. In figure 4 is shown how the stream of molten mineral is widened in a two weel spinning machine is used. The splitting device 3 is arranged so that the part stream 6 hits the spinner wheel 20 whereby a primary melt ring 21 is formed thereon. At the same time the part stream 7 hits the spinner wheel 22 and a corresponding melt ring 23 is formed thereon. Molten mineral from the melt ring 21 is then moved from the spinner wheel 20 to the spinner wheel 22 thereby forming a secondary melt ring 24 thereon. Likewise molten mineral from the melt ring 23 of the spinner wheel 22 is moved to the spinner wheel 20 thereby forming a secondary melt ring 25 thereon. The four melt rings 21, 23, 24 and 25 have a total width which is substantially greater than the total width of the two melt rings which would have been formed in case a non-split molten stream would first have hit the first spinner wheel, corresponding to the spinner wheel 20, and would then have been thrown over to a second spinner wheel, corresponding to the spinner wheel 22.

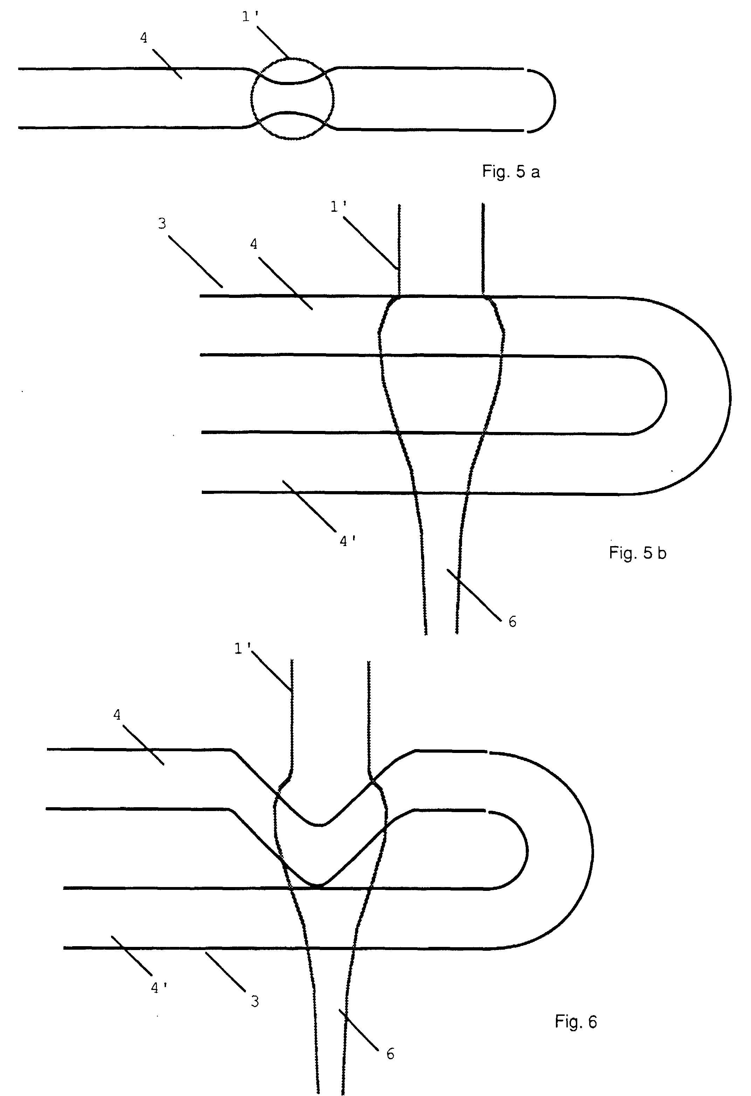

Figures 5a and 5b show a special embodiment of the splitting device 3. In said embodiment the branches 4 and 4' och the splitting device are flattened from the sides thereof. By forming the tube branches accordingly it is possible to provide a guiding of the stream 1' of molten mineral, i.e. to give said stream a special flowing path. The splitter tube parts 8 and 11 of figure 2b also may be flattened like the tube part 4 of figure 5a.

It is also possible to guide the stream 1' of molten mineral in that the branch 4 of the splitting device 3, which is hit by the mineral stream 1', be bent to a V-formation as shown in figure 6. Also the branches of the parts 8 and 11 of figure 2b, which are hit by the part streams 6 and 7, may be formed with such V-shape.

Another embodiment of the splitting device is shown in figure 7. In this embodiment the splitting device is formed with two branches 27 and 28 and a with a horizontal piece of tube 29 interconnecting said branches.

The horizontal piece of splitter tube 29 is the actual splitting device. For guiding the stream of molten mineral said tube piece 29 may be shaped like the branches of the splitting device shown in figures 5 and 6, in the meaning that it can be flattened from the sides or it can be bent down in a V-formation at the place where the molten mineral hits the splitter.

| Reference numerals | | | |
|---|---|---|---|
| 1 | stream, 1' | 16 | second spinner wheel |
| 2 | melt flute | 17 | melt ring |
| 3 | splitter | 18 | third spinner wheel |
| 4 | branches (of 3), 4' | 19 | melt ring |
| 5 | cooling medium | 20 | spinner wheel (fig. 4) |
| 6 | part stream | 21 | melt ring |
| 7 | part stream | 22 | spinner wheel |
| 8 | splitter (fig. 2b) | 23 | melt ring |
| 9 | part stream (fig. 2b) | 24 | secondary melt ring |
| 10 | part stream (fig. 2b) | 25 | secondary melt ring |
| 11 | splitter (fig. 2b) | 26 | splitter (fig. 7) |
| 12 | part stream (fig. 2b) | 27 | branch |
| 13 | part stream (fig. 2b) | 28 | branch |
| 14 | first spinner wheel | 29 | horizontal tube piece |
| 15 | melt ring | | |

## Claims

1. Method of supplying molten mineral (1, 1') to a cascade spinning apparatus having several mainly cylindrical spinner wheels (14, 16, 18) for the manufacture of mineral wool, whereby the molten mineral (1') is supplied to the spinner wheels (14, 16, 18), and whereby particles of the molten mineral are being thrown out therefrom, by the action of the centrifugal force while forming mineral fibres, **characterized** in that a free falling stream (1') of molten mineral is fed towards one or more splitting devices (3; 8; 11; 26) which split(s) the stream of molten mineral (1') into molten part streams (6, 7; 9, 10; 12, 13) which flow along on opposite sides of the splitting device or devices (3; 8, 11; 26), and in that the splitting device or each splitting device (3; 8, 11; 26) splits the molten stream Into two molten part streams, and whereby, in the case that several splitting devices (3; 8, 11; 26) are being used, said splitting devices are arranged successively after each other and each such successive splitting device (8, 11) splits the molten part stream (6, 7) received thereon into two additional part streams (9, 10, 12, 13), and whereby the part streams (9, 10, 12, 13), separately or in combination with other part streams, hits one or more of the spinner wheels (14, 16, 18).

2. Method according to claim 1, **characterized** in that the part streams are firstly split by a primary splitting device (3) and thereafter by means of further splitting devices (8, 11), so that there are finally formed at least four part streams (9, 10, 12, 13) before said part streams (9, 10, 12, 13) hit the spinner wheel or wheels (14, 16, 18).

3. Method according to claim 1 or 2, **characterized** in that the part streams (6, 7; 9, 10, 12, 13) hit one and the same spinner wheel (14).

4. Method according to claim 1, **characterized** in that each of the part streams (6, 7) hits a spinner wheel, which spinner wheels (20, 22) are like large and are placed on the same vertical level and close to each other.

5. Apparatus for supplying molten mineral (1, 1') to a cascade spinning apparatus having several mainly cylindrical spinner wheels (14, 16, 18) for the manufacture of mineral wool, whereby the molten mineral is supplied to the spinner wheels (14, 16, 18), and whereby particles of the molten mineral are being thrown out therefrom by the action of the centrifugal force while forming mineral fibres, **characterized** in that the apparatus comprises one or more splitting devices (3; 8, 11; 26) mounted such that they appear introduced in the stream (1') of molten mineral flowing onto the spinner wheels (14, 16, 18), and which splitting device or each splitting device (3; 8, 11; 26) splits the stream (1') of molten mineral into two or more part streams (6, 7; 9 10; 12, 13) which flow along on opposite sides of the splitting device or devices, and whereby, in the case that several splitting devices (3; 8, 11; 26) are being used, said splitting devices are arranged successively after each other, so that each such successive splitting device (8, 11) splits the molten part stream (6, 7) received thereon into two additional part streams (9, 10, 12, 13), and whereby the part streams (9, 10, 12, 13), separately or in combination with each other, hits one or more of the spinner wheels (14, 16, 18).

6. Apparatus according to claim 5, **characterized** in that the splitting device (3; 8, 11; 26), or each one of the splitting devices, comprises a tube, preferably a tube of a metal having a good thermal conductivity, for instance copper, through which tube a cooling medium (5), e.g. water, flows.

7. Apparatus according to claim 6, **characterized** in that the splitting tube has the shape of a lying down U and having mainly horizontal branches (4, 4') arranged close to each other and above each other.

8. Apparatus according to claim 6 or 7, **characterized** in that the branches (4, 4') of the splitter tube (3; 8, 11; 26) are flattened from its sides at a place along same, and/or in that one of the branches (4, 4'), preferably the upper one (4) of the branches, is bent down in a V-formation at a place where the stream (1') of molten mineral or any part stream hits said splitter branch (4).

9. Apparatus according to claim 5 or 6, **characterized** in that the splitter tube (26) is formed like a lying down U having horizontal branches (27, 28) extending on substantially the same vertical level and having a horizontally exstending tube piece or a U-web portion (29) interconnecting the said branches (27, 28).

10. Apparatus according to claim 9, **characterized** in that the U-shaped splitter tube (26) is mounted with its web portion (29) thereof introduced in the free falling stream (1') of molten mineral, and in that the horizontal web portion (29) of the U-shaped splitter tube (26) is flattened from its sides or in bent down in a V-formation at the place where the molten mineral (1') hits said web portion (29).

## Patentansprüche

1. Verfahren zur Zuführung von geschmolzenem Mineral (1,1') zu einer Kaskadenspinnvorrichtung mit mehreren im wesentlichen zylindrischen Spinnrädern (14, 16, 18) zur Herstellung von Mineralwolle, wobei das geschmolzene Mineral (1') den Spinnrädern (14, 16, 18) zugeführt wird und wobei Partikel des geschmolzenen Minerals durch die Einwirkung der Zentrifugalkraft beim Bilden von Mineralfasern von den Spinnrädern weggeschleudert werden, dadurch gekennzeichnet, daß ein freifallender Strom (1') von geschmolzenem Mineral einem oder mehreren Spliteinrichtungen (3; 8; 11; 26) zugeführt wird, die den Strom von geschmolzenem Mineral (1') in geschmolzenen Teilströme (6, 7; 9, 10; 12, 13) aufteilt, welche entlang entgegengesetzter Seiten der Spliteinrichtung bzw. -einrichtungen (3; 8, 11; 26) fließen, und daß die Spliteinrichtung bzw. jede Spliteinrichtung (3; 8, 11; 26) den geschmolzenen Strom in zwei geschmolzene Teilströme aufteilt, wobei, für den Fall, daß mehrere Spliteinrichtungen (3; 8, 11; 26) verwendet werden, die Spliteinrichtungen hintereinander in Folge angeordnet sind und jede dieser nachfolgenden Spliteinrichtungen (8, 11) den von ihr aufgenommenen geschmolzenen Teilstrom (6, 7) in zwei zusätzliche Teilströme (9, 10, 12, 13) aufteilt, und wobei die Teilströme (9, 10, 12, 13), separat oder in Kombination mit anderen Teilströmen, auf eines oder mehrere der Spinnräder (14, 16, 18) auftreffen.

2. Verfahren nach Anspruch 1, dadurch gekennzeichnet, daß die Teilströme zuerst von einer primären Spliteinrichtung (3) und danach mittels weiterer Spliteinrichtungen (8, 11) geteilt werden, so daß letztendlich wenigstens vier Teilströme (9, 10, 12, 13) geformt werden, bevor die Teilströme (9, 10, 12, 13) auf das Spinnrad oder die Spinnräder (14, 16, 18) auftreffen.

3. Verfahren nach Anspruch 1 oder 2, dadurch gekennzeichnet, daß die Teilströme (6, 7; 9, 10, 12, 13) auf ein und dasselbe Spinnrad (14) auftreffen.

4. Verfahren nach Anspruch 1, dadurch gekennzeichnet, daß jeder der Teilströme (6, 7) ein Spinnrad trifft, die Spinnräder (20, 22) gleich groß und auf der gleichen vertikalen Ebene und nah beieinander angeordnet sind.

5. Vorrichtung zur Zuführung von geschmolzenem Mineral (1,1') zu einer Kaskadenspinnvorrichtung mit mehreren im wesentlichen zylindrischen Spinnrädern (14, 16, 18) zur Herstellung von Mineralwolle, wobei das geschmolzene Mineral (1') den Spinnrädern (14, 16, 18) zugeführt wird und wobei Partikel des geschmolzenen Minerals durch die Einwirkung der Zentrifugalkraft beim Bilden von Mineralfasern von den Spinnrädern weggeschleudert werden, dadurch gekennzeichnet, daß die Vorrichtung eine oder mehrere Spliteinrichtungen ) aufweist, die so angeordnet sind, daß sie in dem auf die Spinnräder (14, 16, 18) fließenden Strom (1') von geschmolzenem Mineral liegen, wobei die Spliteinrichtung bzw. jede Spliteinrichtung (3; 8, 11; 26) den Strom von geschmolzenem Mineral in zwei oder mehr Teilströme (6, 7; 9, 10; 12, 13) aufteilen, die entlang entgegengesetzter Seiten der Spliteinrichtung bzw. -einrichtungen fließen, und wobei, für den Fall, daß mehrere Spliteinrichtungen (3; 8, 11; 26) verwendet werden, die Spliteinrichtungen hintereinander in Folge angeordnet sind und jede dieser nachfolgenden Spliteinrichtungen (8, 11) den von ihr aufgenommenen geschmolzenen Teilstrom (6, 7) in zwei zusätzliche Teilströme (9, 10, 12, 13) aufteilt, und wobei die Teilströme (9, 10, 12, 13), separat oder in Kombination mit anderen Teilströmen, auf eines oder mehrere der Spinnräder (14, 16, 18) auftreffen.

6. Vorrichtung nach Anspruch 5, dadurch gekennzeichnet, daß die Spliteinrichtung (3; 8, 11; 26) bzw. jede der Spliteinrichtungen ein Rohr aufweist, vorzugsweise ein Rohr aus einem Metall mit guter thermischer Leitfähigkeit, beispielsweise Kupfer, durch das ein Kühlmedium (5), z. B. Wasser, fließt.

7. Vorrichtung nach Anspruch 6, dadurch gekennzeichnet, daß das Splitrohr die Form eines liegenden U aufweist, welches mit im wesentlichen horizontalen nah beieinander und übereinander angeordneten Armen (4, 4') versehen ist.

8. Vorrichtung nach Anspruch 6 oder 7, dadurch gekennzeichnet, daß die Arme (4, 4') des Splitrohrs (3; 8, 11; 26) von dessen Seiten her abgeflacht sind und/oder daß einer der Arme (4, 4'), vorzugsweise der obere Arm (4), V-förmig nach unten gebogen ist, und zwar an einer Stelle an der der Strom von geschmolzenem Mineral oder irgendein Teilstrom auf den Splitarm (4) auftrifft.

9. Vorrichtung nach Anspruch 5 oder 6, dadurch gekennzeichnet, daß das Splitrohr wie ein liegendes U geformt ist, das horizontale Arme aufweist, die im wesentlichen auf gleicher vertikaler Höhe liegen und das mit einem sich horizontal erstreckendes Rohrstück oder einem die Arme (27, 28) verbindenden U-Stegabschnitt (29) versehen ist.

10. Vorrichtung nach Anspruch 9, dadurch gekennzeichnet, daß das U-förmige Splitrohr (26) mit seinem Stegabschnitt (29) im freifallenden Strom (1) von geschmolzenem Mineral liegend angeordnet ist und daß der horizontale Stegabschnitt (29) des U-förmigen Splitrohrs (26) von seinen Seiten her abgeflacht oder V-förmig nach unten gebogen ist, und zwar an der Stelle, an der das geschmolzene Mineral (1') auf den Stegabschnitt (29) auftrifft.

## Revendications

1. Procédé d'alimentation en matériau minéral fondu (1, 1') d'un dispositif de filature en cascade ayant plusieurs rouets cylindriques (14, 16, 18) pour la fabrication de laine minérale, dans lequel le matériau minéral fondu (1') alimente les rouets (14, 16, 18) et dans lequel des particules du matériau minéral fondu sont expulsées hors de ceux-ci sous l'effet de la force centrifuge tout en formant des fibres minérales, caractérisé en ce qu'un courant en chute libre (1') de matériau minéral fondu est amené vers un ou plusieurs dispositifs de séparation (3 ; 8 ; 11 ; 26) qui sépare(nt) le courant de matériau minéral fondu (1') en courants partiels en fusion (6, 7 ; 9, 10 ; 12, 13) qui s'écoulent sur des côtés opposés du ou des dispositifs de séparation (3 ; 8, 11 ; 26) et en ce que le dispositif de séparation ou chaque dispositif de séparation (3 ; 8, 11 ; 26) sépare le courant en fusion en deux courants partiels en fusion, et dans lequel, dans le cas où l'on utilise plusieurs dispositifs de séparation (3 ; 8, il ; 26), lesdits dispositifs de séparation sont agencés les uns à la suite des autres et chaque dispositif de séparation successif (8, 11) sépare le courant partiel en fusion (6, 7) qu'il reçoit en deux courants partiels supplémentaires (9, 10, 12, 13) et dans lequel les courants partiels (9, 10, 12, 13), séparément ou en combinaison avec d'autres courants partiels, viennent heurter un ou plusieurs des rouets (14, 16, 18).

2. Procédé selon la revendication 1, caractérisé en ce que les courants partiels sont d'abord séparés par un dispositif de séparation principal (3) puis au moyen d'autres dispositifs de séparation (8, 11), de sorte que sont enfin formés au moins quatre courants partiels (9, 10, 12, 13) avant que lesdits courants partiels (9, 10, 12, 13) ne heurtent le ou les rouets (14, 16, 18).

3. Procédé selon la revendication 1 ou 2, caractérisé en ce que les courants partiels (6, 7 ; 9, 10, 12, 13) heurtent un seul et même rouet (14).

4. Procédé selon la revendication 1, caractérisé en ce que chacun des courants partiels (6, 7) heurte un rouet, lesquels rouets (20, 22) ont la même largeur et sont placés au même niveau vertical et à proximité les uns des autres.

5. Appareil pour alimenter en matériau minéral fondu (1, 1') un dispositif de filature en cascade ayant plusieurs rouets principalement cylindriques (14, 16, 18) pour la fabrication de laine minérale, dans lequel le matériau minéral fondu alimente les rouets (14, 16, 18) et dans lequel des particules du matériau minéral fondu sont expulsées hors de ceux-ci sous l'effet de la force centrifuge tout en formant des fibres minérales, caractérisé en ce que l'appareil comprend un ou plusieurs dispositifs de séparation (3 ; 8, 11 ; 26) montés de telle sorte qu'ils semblent introduits dans le courant (1') de matériau minéral fondu s'écoulant sur les rouets (14, 16, 18) et lequel dispositif de séparation ou chaque dispositif de séparation (3 ; 8, il ; 26) sépare le courant (1') de matériau minéral fondu en deux ou plusieurs courants partiels (6, 7 ; 9, 10 ; 12, 13) qui s'écoulent sur des côtés opposés du ou des dispositifs de séparation et dans lequel, dans le cas où l'on utilise plusieurs dispositifs de séparation (3 ; 8, 11 ; 26), lesdits dispositifs de séparation sont agencés les uns à la suite des autres de sorte que chaque dispositif de séparation successif (8, 11) de ce type sépare le courant partiel en fusion (6, 7) reçu sur celui-ci en deux courants partiels supplémentaires (9, 10, 12, 13) et dans lequel les courants partiels (9, 10, 12, 13), séparément ou en combinaison les uns avec les autres, heurtent un ou plusieurs des rouets (14, 16, 18).

6. Appareil selon la revendication 5, caractérisé en ce que le dispositif de séparation (3 ; 8, 11 ; 26) ou chacun des dispositifs de séparation, comprend un tube, de préférence un tube en métal ayant une bonne conductivité thermique, par exemple du cuivre, tube à travers lequel circule un milieu de refroidissement (5), par exemple de l'eau.

7. Appareil selon la revendication 6, caractérisé en ce que le tube de séparation a la forme d'un U couché et pourvu de tiges principalement horizontales (4, 4') agencées à proximité l'une de l'autre et l'une au-dessus de l'autre.

8. Appareil selon la revendication 6 ou 7, caractérisé en ce que les tiges (4, 4') du tube de séparation (3 ; 8, 11 ; 26) sont aplaties sur leurs côtés en un endroit le long de celui-ci et/ou en ce que l'une des tiges (4, 4'), de préférence la tige supérieure (4), est incurvée en forme de V en un endroit où le courant (1') de matériau minéral fondu ou tout courant partiel heurte ladite tige de séparation (4).

9. Appareil selon la revendication 5 ou 6, caractérisé en ce que le tube de séparation (26) est formé comme un U couché ayant des tiges horizontales (27, 28) s'étendant sensiblement au même niveau vertical et ayant une pièce tubulaire s'étendant horizontalement ou une partie pleine en U (29) reliant lesdites tiges entre elles (27, 28).

10. Appareil selon la revendication 9, caractérisé en ce que le tube de séparation en forme de U (26) est monté avec sa partie pleine (29) introduite dans le courant en chute libre (1') de matériau minéral fondu, et en ce que la partie pleine horizontale (29) du tube de séparation en forme de U (26) est aplatie sur ses côtés ou est incurvée en forme de V à l'endroit où le matériau minéral fondu (1') vient heurter ladite partie pleine (29).
